# EUROPÄISCHE PATENTSCHRIFT

(11) **EP 0 765 488 B1**
(45) Veröffentlichungstag und Bekanntmachung des Hinweises auf die Patenterteilung: **21.10.1998**
(21) Anmeldenummer: 95924207.4
(22) Anmeldetag: 10.06.1995
(51) Int. Cl.: G02B 5/18

(54) **GITTERSTRUKTUR UND DEREN VERWENDUNG**
GRATING STRUCTURE AND ITS USE
STRUCTURE EN RESEAU ET SON UTILISATION

(30) Priorität: 18.06.1994 DE 4421392
(43) Veröffentlichungstag der Anmeldung: 02.04.1997
(73) Patentinhaber: Forschungszentrum Karlsruhe GmbH, 76133 Karlsruhe (DE)
(72) Erfinder: MOSER, Herbert, D-76227 Karlsruhe (DE); MÖLLER, Karl-Dieter, Allendale, NJ 07104 (US)
(74) Vertreter: Rückert, Friedrich, Dr.
(86) Internationale Anmeldenummer: EP9502243
(87) Internationale Veröffentlichungsnummer: WO9535516

(56) Entgegenhaltungen:
- EP-A- 0 649 037
- WO-A-91/12543

## Beschreibung

Die Erfindung betrifft eine Gitterstruktur nach dem Oberbegriff des Patentanspruchs 1, sowie deren Verwendung.

Eine Gitterstruktur der e. g. Art ist aus C. W. Haggans et al.,Lamellar Gratings as Polarisation Compounds for Specularly Reflected Beams, Journ. of Modern Optics 40, 675-686 (1993) bekannt.

Es ist ein Vielkanal-Fourierspektrometer für das Infrarote bekannt, bei dem das einfallende Lichtbündel durch eine doppeltbrechende Savert-Platte in zwei Teilbündel aufgespalten wird, die danach auf die Bildebene eines CCD-Detektors abgebildet werden und dort je nach ihrer Neigung zur optischen Achse eine mit dem Auftreffort korrelierte Phasenverschiebung haben (Appl. Opt. 31, 6096 (1992)).

In diesem Vielkanal-Fourierspektrometer wird die Amplitude der einfallenden Strahlung in zwei Teile geteilt, und die Interferogrammpunkte ergeben sich aus der räumlichen Intensitätsverteilung der beiden überlagerten Strahlteile. Die räumlichen Punkte haben einen Abstand, der einer halben Wellenlänge des kurzwelligsten einfallenden Lichtes entspricht. Die realistischen Meßintervalle, deren Zentren den gewünschten Abstand haben, können nicht punktförmig sein, sondern müssen eine nichtverschwindende Ausdehnung haben. Diese muß so groß gewählt werden, daß ein ausreichendes Signal registriert werden kann, aber auch so klein, daß die Modulation des Interferogramms nicht beeinträchtigt wird. Beträgt die Größe dieser Intervalle z. B. 10 % des Abstandes der Zentren, so gehen 90 % des Lichtes für die Auswertung des Interferogramms verloren.

Darüber hinaus eignet sich dieses Prinzip wegen der Savert-Platte nicht für die Miniaturisierung und Massenfabrikation.

Es ist die Aufgabe der Erfindung, unter Benutzung des Prinzips der Wellenfrontteilung ein geeignetes diffraktiv-optisches Element bereitzustellen, sowie eine Verwendung anzugeben.

Gelöst wird diese Aufgabe durch die Patentansprüche 1 und 8. Die Unteransprüche beschreiben vorteilhafte Ausgestaltungen der Gitterstruktur.

Gemäß der vorliegenden Erfindung können Fourierspektrometer durch Kombination des Wellenfrontaufteilungsprinzips mit mikrotechnischen Fertigungsverfahren so weit miniaturisiert werden, daß ihre Größe und Kosten im wesentlichen durch die CCD-Kamera bestimmt werden, während die heute üblichen Instrumente Koffergröße und fünfstellige DM-Preise haben. Das vorgeschlagene Gerät ist automatisch vielkanalig, also auch zur zeitaufgelösten Messung geeignet. Anwendungsgebiete sind die Umwelttechnik, Prozeßkontrolle, Analytik und die Luft- und Raumfahrt.

Die Erfindung benutzt im Gegensatz zur Amplitudenteilung die Teilung der Wellenfront des einfallenden Lichtes. Dieses wird in NxN Teilbündel aufgeteilt, und für jedes einzelne davon wird einer der NxN verschiedenen optischen Phasenunterschiede eingeführt. Der Detektor empfängt den überwiegenden Anteil des Lichtes der NxN Teilbündel, so daß nahezu der gesamte einfallende Lichtstrom genutzt wird. Da die Strahlen jedes Teilbündels, die vom Detektor registriert werden, den gleichen Phasenunterschied haben, ergibt sich eine optimale Intensität und Modulation des Interferogramms.

Bei der Verwendung von DOE's mit gekrümmten Flächen kann die Abbildungsoptik im Spektrometer entfallen.

Die Erfindung wird im folgenden anhand von Beispielen mit Hilfe der Figuren näher erläutert.

Dabei zeigen die Figuren:

Fig. 1: Konturierte, in LIGA-Technik hergestellte Bleche zum Aufbau eines Formeinsatzes (Draufsicht).

Fig. 2: Montierter Formeinsatz.

Fig. 3: Alternative Form der konturierten Bleche (isometrische Ansicht).

Fig. 4: Bleche mit schachbrettartiger Stufen-, aber zunächst ohne Steg- und Grabenstruktur.

Fig. 5: Stufenerzeugung durch lokal begrenzte Schichtabscheidung (Aufdampfen, -sputtern).

Fig. 6: Gestufte Oberfläche, hergestellt in Kunststoff durch Ablation mittels Excimerlaser. Die Stufen entstehen durch Verschieben des Probentisches gegenüber dem rechteck- förmigen Laserstrahl.

Fig. 7: In Reflexion arbeitendes Fourierspektrometer.

Fig. 8: In Transmission arbeitendes Fourierspektrometer.

Fig. 9: Fourierspektrometer ohne bewegliche Teile, realisiert als Michelson-Interferometer, dessen einer Spiegel ein schachbrettartig gestuftes diffraktiv-optisches Element ist.

Das diffraktiv-optische Element bzw. das Spektrometer enthält eine Fläche, die in NxN lamellare Gitter, z. B. 8 x 8, aufgeteilt ist, wobei ein lamellares Gitter aus einer Folge von m Stegen und Gräben, z. B. m = 5, besteht. Die Stegrücken sowie die Grabenböden sind ebene Flächen optischer Qualität. Diese Fläche wird mit Hilfe der nachfolgend beschriebenen mikrotechnischen Methoden hergestellt. Jedes Gitter repräsentiert einen bestimmten optischen Gangunterschied für das Interferogramm. Alle zusammen ergeben eine Signalkurve, wie sie durch ein bewegliches Fourier-Spektrometer auch erzeugt würde, jedoch mit dem wesentlichen Vorteil, daß das Interferogramm nicht als Funktion der Zeit abgetastet wird, sondern daß alle Punkte simultan vorliegen, so daß man auch eine echte zeitabhängige Fourier-Spektroskopie betreiben kann.

Mit den im folgenden beschriebenen Verfahren können entweder direkt solche diffraktiv-optische Elemente oder aber Formeinsätze zu ihrer Abformung hergestellt werden.

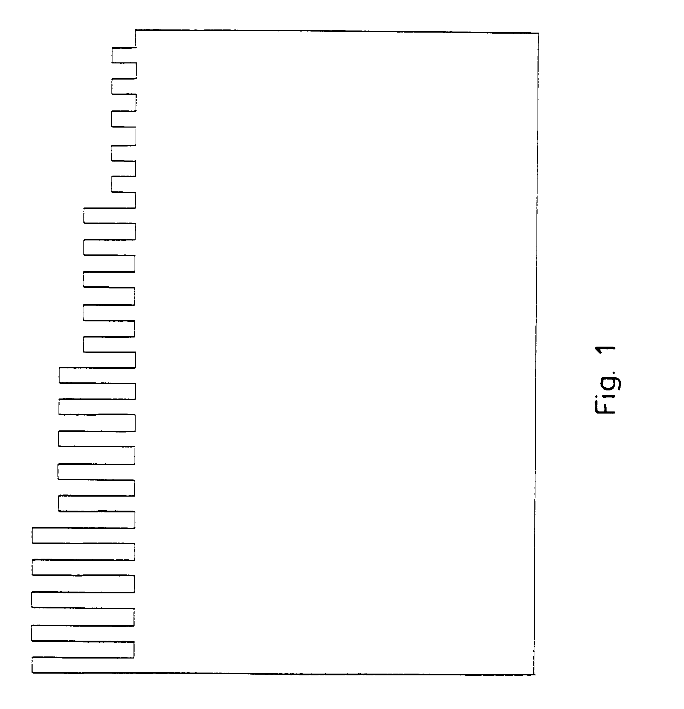

Mittels LIGA werden konturierte Bleche einer gewünschten Dicke zwischen 10 µm und 500 µm, hier z. B. 500 µm, hergestellt (Fig. 1; der Einfachheit halber sind nur vier Abstufungen dargestellt). Die Breite der Gräben und Stege beträgt z. B. je 100 µm. Je fünf Stege und Gräben beispielsweise haben dieselbe Tiefe und erstrecken sich über eine Länge von 1 mm. Die Tiefe variiert von ca. 0,5 µm in Schritten von 0,5 µm bis 32 µm für Anwendungen im Infraroten ab 2 µm. Die verschiedene Tiefe der lamellaren Gitterstufen erlaubt die Erzeugung verschiedener optischer Gangunterschiede. Von diesen konturierten Blechen werden 16 Stück hergestellt, von denen je zwei identisch sind. Der Abstand zwischen Blechunterkante und Grabenboden ist bei allen Blechen gleich. Die Höhe der Stege bzw. die Tiefe der Gräben verändert sich von Paar zu Paar um 4 µm im gewählten Beispiel. Die Bleche werden auf einer feinwerktechnisch bearbeiteten planen Grundplatte gestapelt und von Klemmblöcken fixiert. Die Kantenlänge des Stapels beträgt 8mm in beiden Richtungen. Es ist klar, daß die mit LIGA herzustellenden konturierten Bleche auch praktisch beliebige andere Wellenformen als Rechtecke haben können, z. B. sinus-, sägezahn-, dreiecksförmig, so daß verschiedene Interferenzeffekte erzielt werden können. Ebenso lassen sich die Formeinsätze verwenden, um z. B. Bragg-Gitter als Ein- oder Auskoppelvorrichtung für polymere integriert-optische Bauelemente zu erzeugen.

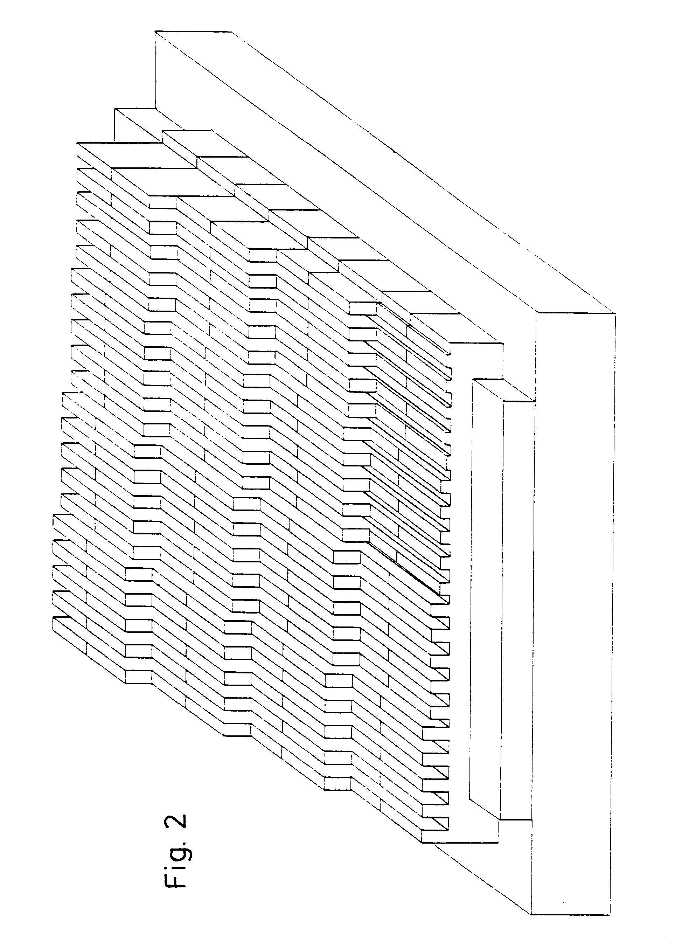

Diese Vorrichtung stellt sowohl ein DOE als auch einen Formeinsatz dar (Fig. 2: der Einfachheit halber sind nur 4 x 4 Array-Felder gezeichnet), der zum Spritz- oder Reaktionsguß oder zum Prägen verwendet werden kann. Mit Hilfe dieses Formeinsatzes wird ein Kunststoffteil, z. B. aus PMMA oder warmfesteren Materialien wie Polyadamantylmethacrylat, Polycarbonat (PC) oder Polyarylaten erzeugt, dessen Oberfläche durch Bedampfen oder Sputtern mit einem Metall wie Al oder Au oder durch Aufbringen dielektrischer Schichten in einem gewünschten Maße verspiegelt werden kann. Die Gräben können durch ein Material mit hohem Brechungsindex aufgefüllt werden, wodurch sowohl der optische Weg verlängert und damit die Phasenverschiebung vergrößert als auch die mechanische Festigkeit verbessert und die Schmutzempfindlichkeit verringert werden.

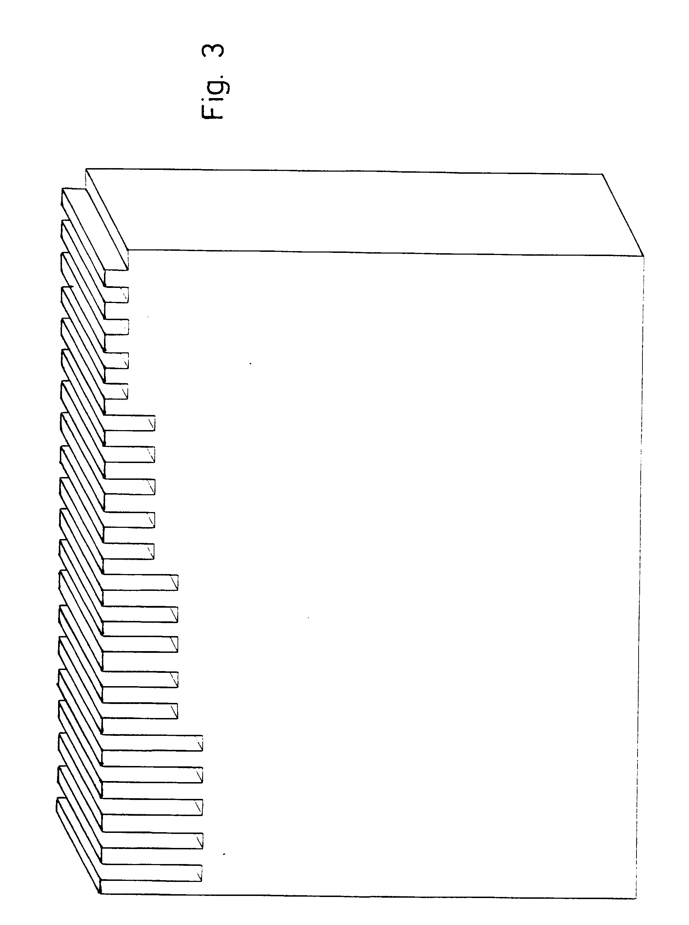

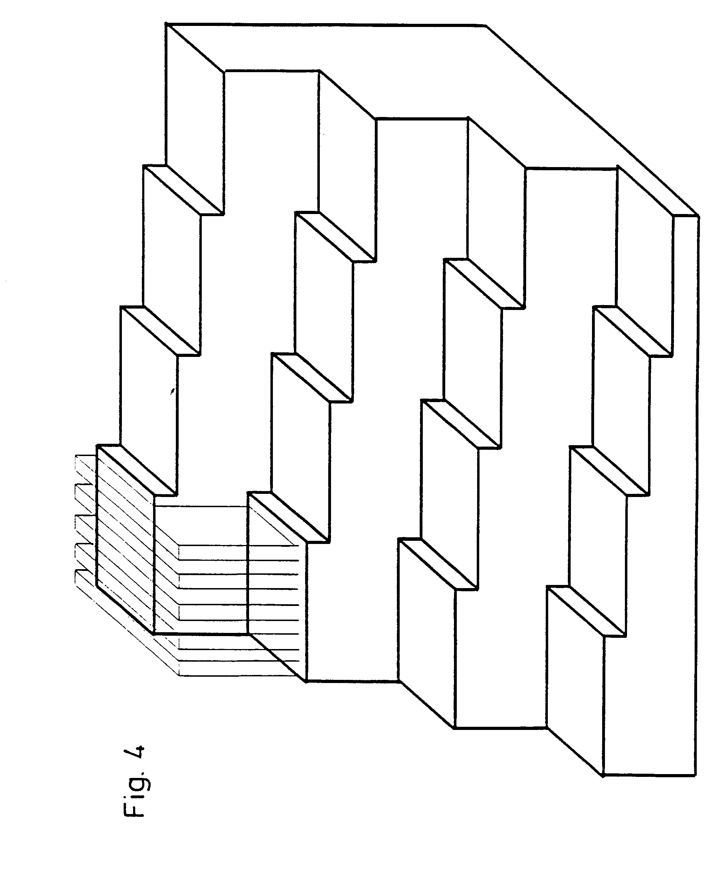

Bei dieser Ausführungsform sind die Grabenböden des Formeinsatzes und damit die Stegrücken des Formteils auf gleichem Niveau. Dies kann grundsätzlich auch vertauscht werden, so daß die Stegrücken des Formeinsatzes und damit die Grabenböden des Formteils auf gleichem Niveau sind. Dadurch ändern sich die Bleche in der in Fig. 3 skizzierten Form. Darüberhinaus kann man den Formeinsatz auch aus den in Fig. 4 dargestellten, treppenförmig gestuften Blechen herstellen, stapeln, danach ihre Oberfläche durch einen Röntgenresist, z. B. PMMA, abdecken und in den Resist mittels Röntgentiefenlithographie ein Streifenmuster transferieren, das nach Entwicklung galvanisch aufgefüllt wird, so daß die Stege entstehen. Nach feinmechanischer Planbearbeitung und Polieren der Oberfläche wird der Resist durch Wiederbelichten und Entwickeln, im Sauerstoff-Plasma oder durch Excimerlaserablation abgelöst ("gestrippt") und es entsteht die fertige Interferometeroberfläche, die auch als Formeinsatz für nachfolgende Kunststoffabformung dienen kann.

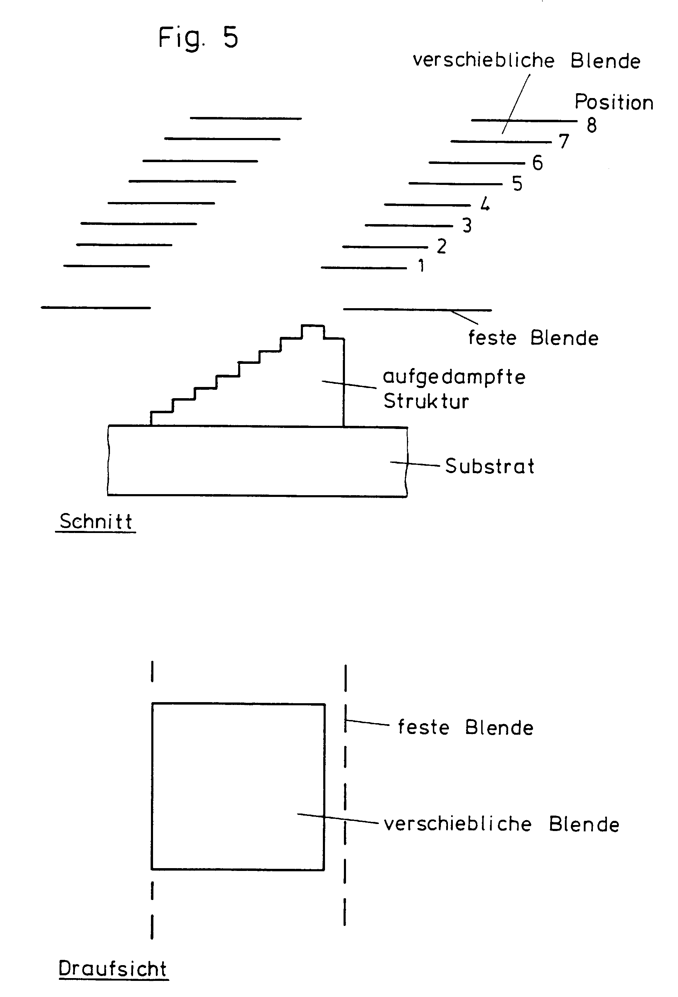

Während sich das bisher beschriebene Herstellungsverfahren mittels LIGA-Technik besonders für den IR-Bereich eignet, ist das folgende, auf dünnschichttechnischen Methoden beruhende für den sichtbaren und ultravioletten Spektralbereich wegen der geringeren Stufenhöhen günstiger. Dabei werden räumlich strukturiert verschieden dicke Schichten auf einem Substrat abgeschieden. Fig. 5 zeigt im Querschnitt, wie die Schichtdicke lokal durch Blenden vorgegeben wird. Eine feste Blende mit quadratischer Öffnung a x a definiert den überhaupt zu beschichtenden Bereich. Darunter ist eine Spaltblende der Weite a(1- 1/N) verschiebbar angeordnet. In jeder Stellung der verschieblichen Blende wird eine durch die Auslegungsdaten des Interferometers bestimmte Schichtdicke eines geeigneten Materials wie z. B. Al oder Au durch Aufdampfen oder Sputtern abgeschieden, so daß ein treppenförmiges Profil entsteht. Danach wird die Anordnung um 90° gedreht und in derselben Weise ein Stufensystem orthogonal zum schon existierenden aufgebracht. Seine Stufenhöhe ist kleiner und beträgt 1/N der Höhe der großen Stufen. Dadurch entsteht eine Oberfläche, die schachbrettartig in Felder verschiedener Höhe unterteilt ist (entsprechend Fig. 4). Im nächsten Schritt wird diese Fläche wie oben beschrieben durch einen Röntgenresist, z. B. PMMA, abgedeckt. In den Resist wird mittels Röntgentiefenlithographie ein Streifenmuster transferiert, das nach Entwicklung galvanisch aufgefüllt wird, so daß die Stege entstehen. Nach Ablösen des Resists durch Wiederbelichten und Entwickeln, im Sauerstoff-Plasma oder durch Excimerlaserablation entsteht die fertige Interferometeroberfläche, die auch als Formeinsatz für nachfolgende Kunststoffabformung dienen kann.

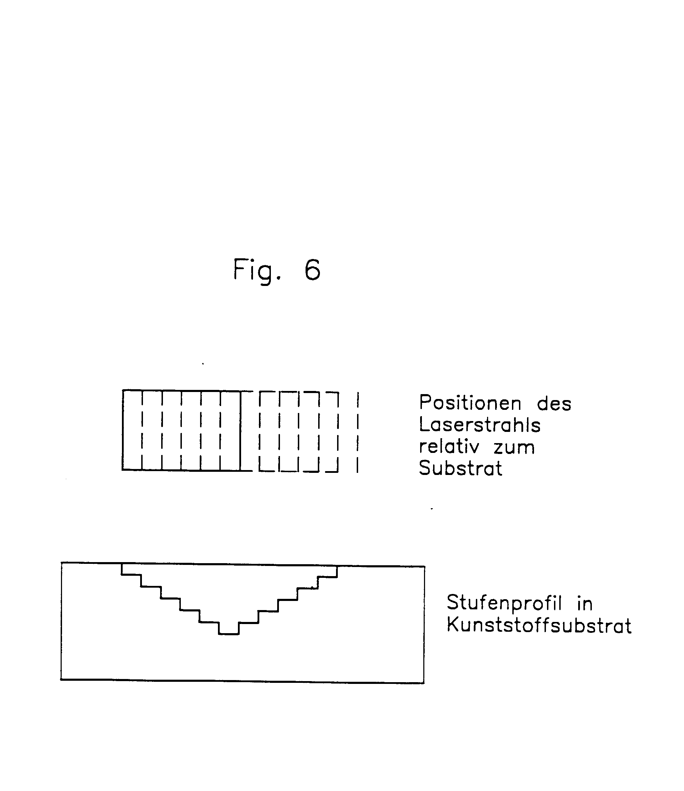

Ein drittes Herstellungsverfahren nutzt die Ablation von Kunststoffen durch Bestrahlen mit Excimerlaserlicht. Dabei wird von einem Plättchen aus geeignetem Kunststoff, z. B. PMMA, durch Bestrahlen mit einem Excimerlaser, z. B. einem ArF-Laser mit einer Wellenlänge von 193 nm, Material an der Oberfläche abgetragen. Durch Abbildung einer vom Laser beleuchteten Blende wird an der Materialoberfläche ein scharf begrenzter rechteckiger Lichtfleck erzeugt. Sukzessives Verschieben des Probentisches in zwei zueinander orthogonalen Richtungen liefert einen stufenweisen Materialabtrag, so daß ebenfalls wieder das Schachbrett mit Feldern verschiedener Höhe entsteht (Fig. 6). Vorteilhaft kann dabei sein, daß sich in einem Arbeitsgang zwei Strukturen ergeben. Die Stege werden in der schon beschriebenen Weise hergestellt.

Kombinationen der genannten Verfahren sind möglich und u. U. aus ökonomischen Gründen wünschenswert. Ebenso können die so hergestellten Arrays mit Metallen wie z. B. Aluminium oder Silber oder mit Kunststoffen wie z. B. PTFE beschichtet werden, um die optische Reflektivität oder die chemische Resistenz zu verbessern.

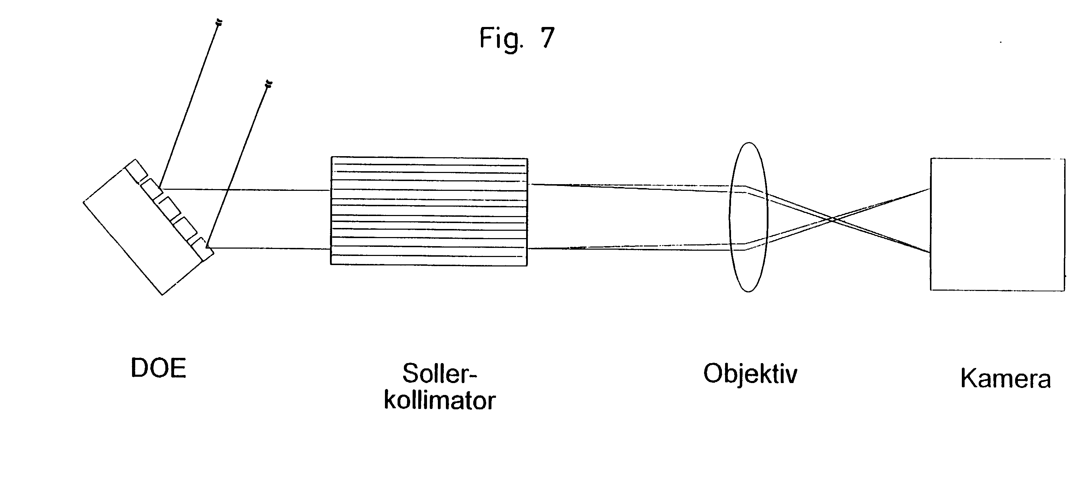

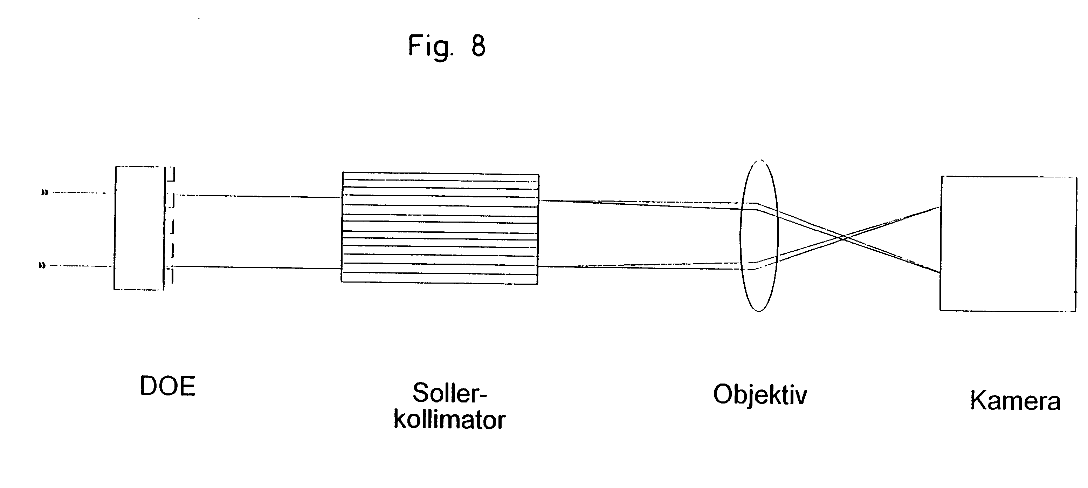

Die so produzierten lamellaren Gitter-Arrays bilden nun zusammen mit optischen Elementen, einer ebenfalls mikrotechnisch hergestellten Blendenplatte und einer Diodenarray- oder CCD-Kamera mit Controller und Computerauswertung das gesamte Fourierspektrometersystem. Je nach Wellenlängenbereich können solche Systeme in Reflexion (Fig. 7) oder Transmission (Fig. 8) arbeiten.

In Fig. 7 fällt ein paralleles oder durch eine Optik kollimiertes Lichtbündel auf die Oberfläche des DOE ein und wird durch Reflexion in NxN kohärente Teilbündel aufgeteilt, in denen wiederum eine Hälfte des Lichtbündels eine bestimmte Phasenverschiebung erfahren hat. Dann durchläuft das reflektierte Bündel einen Kollimator oder einen Satz von Blenden, wobei nur die nullte Beugungsordnung durchgelassen wird. Dieser Kollimator muß ein Aspektverhältnis größer als das Verhältnis der Gitterkonstante zur kürzesten Wellenlänge, d. h. i. a. größer 100, haben. Er wird beispielsweise in LIGA-Technik hergestellt. Der ortsauflösende Detektor kann dann unmittelbar an den Kollimator angeschlossen werden oder es kann noch eine optische Anordnung aus Linsen oder Hohlspiegeln dazwischengeschaltet werden, mit der die Oberfläche des DOE auf den Detektor abgebildet wird. Das Fourierspektrum läßt sich so an der Kamera ortsabhängig auslesen.

In Fig. 8 fällt ebenfalls ein paralleles oder durch eine Optik kollimiertes Lichtbündel auf die Oberfläche des DOE ein und wird durch Transmission in NxN kohärente Teilbündel aufgeteilt, in denen wiederum eine Hälfte des Lichtbündels eine bestimmte Phasenverschiebung erfahren hat. Hier kann als Material mit Vorteil ein Photolime Gel eingesetzt werden, das auch im nahen Infrarot eine gute Transmission aufweist. Dieses Gel ist in R. T. Chen, Polymer-based Photonic Integrated Circuits, Optics & LaserTechnology 25 (1993) 347-365 beschrieben.Wie in Fig. 7 folgt wieder ein Kollimator, eine optionale Optik und eine Kamera.

In Transmission kann man durch Aufbau des DOE aus zwei Materialien auch den Brechungsindexunterschied der Materialien zur Festlegung des Phasenunterschiedes heranziehen. Dadurch können die Stufenhöhen größer gemacht werden. Dies ist insbesondere im Sichtbaren und nahen Ultraviolett interessant, da hier die Stufenhöhen bei Reflexionsbetrieb sehr klein werden.

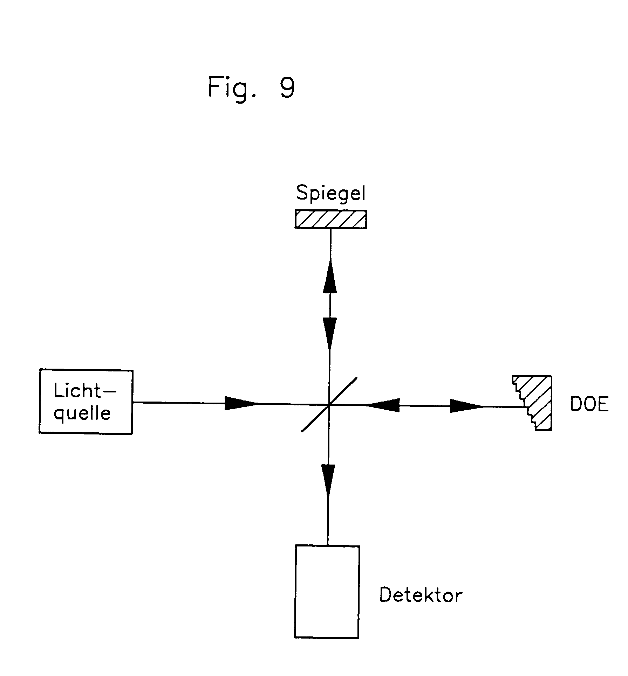

Die in Fig. 4 gezeigte Platte läßt sich darüberhinaus als einer der beiden Spiegel eines Michelson-Interferometers benutzen, das dann ebenfalls ohne bewegte Teile ein instantanes Fourierspektrum liefert (Fig. 9). Der Vorteil dieser Anordnung besteht darin, daß die Abstände der beiden Spiegel zum Strahlteiler so gewählt werden können, daß man entweder ein zweiseitiges, symmetrisches Interferogramm oder ein einseitiges Interferogramm aufnehmen kann, die sich durch die Auflösung und die Definition der Nullinie unterscheiden. Das einseitige Interferogramm gibt eine doppelt so große Auflösung, während das zweiseitige die Nullinie definiert. Diese beiden Optionen sind mit dem vollständigen Gitter-DOE nicht realisierbar. Weiterhin ist es damit möglich, den Peak der nullten Ordnung aus dem vom Detektor empfangenen Signal von vornherein auszuschneiden und auf diese Weise den dynamischen Bereich erheblich auszuweiten.

Die typisch gewählte Phasenverschiebung innerhalb eines Teilbündels beträgt ein Vielfaches von 2π der kürzesten Wellenlänge.

Die Auflösung von Fourierspektrometern ist gegeben durch das Produkt aus der maximalen Verschiebung und der Wellenzahl, d. h. N²/2.

## Patentansprüche

1. Gitterstruktur zur Verwendung in einem Fourierspektrometer mit einer Vielzahl von binären Lamellengittern, welche jeweils eine Folge von erhabenen und versenkten Flächen optischer Qualität aufweisen, und welche jeweils in voneinander verschiedenen Flächenbereichen angeordnet sind, wobei die erhabenen und versenkten Flächen der jeweiligen Lamellengitter voneinander abweichende Höhenunterschiede aufweisend.

2. Gitterstruktur nach Anspruch 1, dadurch gekennzeichnet, daß die Höhenunterschiede im µm-Bereich liegen.

3. Gitterstruktur nach Anspruch 1 oder 2, dadurch gekennzeichnet, daß die Flächen eine Kantenlänge zwischen 0,01 und 0,5 mm besitzen.

4. Gitterstruktur nach einem der Ansprüche 1 bis 3, dadurch gekennzeichnet, daß mindestens 64 Flächenpaare mit 64 verschiedenen Höhenunterschieden vorhanden sind.

5. Gitterstruktur nach einem der Ansprüche 1 bis 4, dadurch gekennzeichnet, daß zu jedem Höhenunterschied mehrere Flächenpaare vorhanden sind.

6. Gitterstruktur nach einem der Ansprüche 1 bis 5, dadurch gekennzeichnet, daß die benachbarten erhabenen und versenkten Flächen in gleicher Weise gekrümmt sind.

7. Gitterstruktur nach einem der Ansprüche 1 bis 6, dadurch gekennzeichnet, daß die beiden einhüllenden Flächen von jeweils allen erhabenen und jeweils allen versenkten Flächen die gleiche Krümmung aufweisen.

8. Gitterstruktur nach einem der Ansprüche 1 bis 7, dadurch gekennzeichnet, daß die Flächen linear oder in Form eines zweidimensionalen Feldes angeordnet sind.

9. Verwendung der Gitterstruktur gemäß einem der Ansprüche 1 bis 8 als diffraktiv-optisches Element in einem Fourier-spektrometer.

## Claims

1. Grating structure for use in a Fourier spectrometer, having a plurality of binary lamellar lattices, which each have a series of raised and sunk surfaces of optical quality, and which are each disposed in surface regions which differ from one another, the raised and sunk surfaces of the particular lamellar lattices having differences in height which vary from one another.

2. Grating structure according to claim 1, characterised in that the differences in height lie in the µm range.

3. Grating structure according to claim 1 or 2, characterised in that the surfaces have an edge length between 0.01 and 0.5 mm.

4. Grating structure according to one of claims 1 to 3, characterised in that there are at least 64 pairs of surfaces with 64 various differences in height.

5. Grating structure according to one of claims 1 to 4, characterised in that there are a plurality of pairs of surfaces for each difference in height.

6. Grating structure according to one of claims 1 to 5, characterised in that the adjacent raised and sunk surfaces are bent in an identical manner.

7. Grating structure according to one of claims 1 to 6, characterised in that the two respective enveloping surfaces of all of the raised surfaces and all of the sunk surfaces have the same curvature.

8. Grating structure according to one of claims 1 to 7, characterised in that the surfaces are disposed linearly or in the form of a two-dimensional array.

9. Use of the grating structure according to one of claims 1 to 8 as a diffractive-optical element in a Fourier spectrometer.

## Revendications

1. Structure de réseau applicable à un spectromètre de Fourier qui comporte un grand nombre de réseaux lamellaires binaires ayant chaque fois une suite de surfaces optiques en saillie ou en creux, de qualité et qui sont réparties chaque fois dans des zones de surfaces différentes les unes des autres, les surfaces en saillie et en creux ayant des différences de hauteurs déviant de l'une à l'autre, avec un grand nombre de réseaux lamellaires binaires avec des différentes de hauteurs importantes.

2. Structure de réseau selon la revendication 1,
caractérisée en ce que
les différences de hauteurs se situent dans l'ordre de µm.

3. Structure de réseau selon la revendication 1 ou 2,
caractérisée en ce que
les surfaces ont le long d'une longueur d'arête entre 0,01 et 0,5 mm.

4. Structure de réseau selon l'une des revendications 1 à 3,
caractérisée par
au moins 64 paires de surfaces avec 64 différences de hauteurs non égales.

5. Structure de réseau selon l'une des revendications 1 à 4,
caractérisée en ce qu'
à chaque différence de hauteur, on a plusieurs paires de surfaces.

6. Structure de réseau selon l'une des revendications 1 à 5,
caractérisée en ce que
les surfaces voisines en saillie en creux sont courbées de la même manière.

7. Structure de réseau selon l'une des revendications 1 à 6,
caractérisée en ce que
les deux surfaces enveloppes de chaque fois toutes les surfaces en saillie ou en relief ont la même courbure.

8. Structure de réseau selon l'une des revendications 1 à 7,
caractérisée en ce que
les surfaces sont linéaires ou en forme de champs bidimentionnels.

9. Application de la structure de réseau selon l'une des revendications 1 à 8, comme éléments optiques de diffraction dans un spectromètre de Fourier.
